# EUROPÄISCHE PATENTSCHRIFT

(11) **EP 2 736 732 B1**
(45) Veröffentlichungstag und Bekanntmachung des Hinweises auf die Patenterteilung: **08.06.2016**
(21) Anmeldenummer: 12769404.0
(22) Anmeldetag: 01.10.2012
(51) Int. Cl.: B60B 35/00, B60G 7/02, B60G 11/02, B60G 17/02

(54) **ACHSJUSTIERUNG FÜR ACHSEN VON NUTZFAHRZEUGEN**
AXLE ADJUSTMENT FOR AXLES OF UTILITY VEHICLES
DISPOSITIF D'AJUSTEMENT DES ESSIEUX DE VÉHICULES UTILITAIRES

(30) Priorität: 10.10.2011 DE 102011084198
(43) Veröffentlichungstag der Anmeldung: 04.06.2014
(73) Patentinhaber: SAF-HOLLAND GmbH, 63856 Bessenbach (DE)
(72) Erfinder: KHOURY, Jean, 63303 Dreieich (DE)
(74) Vertreter: Müller Schupfner & Partner Patent- und Rechtsanwaltspartnerschaft mbB
(86) Internationale Anmeldenummer: PCT/EP2012/069309
(87) Internationale Veröffentlichungsnummer: WO 2013/053610

(56) Entgegenhaltungen:
- EP-A2- 0 306 626
- GB-A- 2 257 670
- US-A- 3 880 444
- US-A- 5 119 543
- US-A1- 2003 132 593
- US-A1- 2005 156 398
- US-A1- 2011 068 524

## Beschreibung

Die vorliegende Erfindung betrifft eine Achsjustierung für vorzugsweise blattgefederte Achsen von Nutzfahrzeugen gemäß Anspruch 1.

Achsjustierungen für blattgefederte Achsen von Nutzfahrzeugen sind aus dem Stand der Technik bekannt. Es wird dabei insbesondere die Spur einer Achse bzw. die Spur der an der Achse festgelegten Räder mittels einer Achsjustierung eingestellt bzw. korrigiert. Bei aus dem Stand der Technik bekannten Achsjustierung wird dabei insbesondere eine Spindel bzw. ein Gewindestab verwendet, welcher gegenüber einem Eingriffselement verdreht wird und somit eine Verkürzung oder Verlängerung des Justierelements auslöst, welche wiederum an einem Ende der Achse eine Verlagerung längs der Fahrzeuglängsachse des Nutzfahrzeuges verursacht. Problematisch ist dabei, dass die Spindel anfällig für Verschmutzung, Korrosion oder Beschädigung durch während der Fahrt aufgewirbelte Teile ist und dass die Einstellung der Spindel aufwändig ist, insbesondere aufgrund einer Vielzahl notwendiger Montageschritte, und somit die Betriebssicherheit des Nutzfahrzeugs nur mit hohem Aufwand gewährleistet werden kann.

Die US-A-2011/0068524 offenbart eine Achsjustierung gemäß dem Oberbegriff von Anspruch 1, für eine blattgefederte Achse von Nutzfahrzeugen mit einer Rahmeneinheit, einem Exzenterelement und einer Justiereinheit, wobei das Exzenterelement eine erste Kontur aufweist, über die eine Justiereinheit mit dem Exzenterelement in Eingriff bringbar ist und wobei das Exzenterelement eine zweite Kontur aufweist, über die die Rahmeneinheit mit dem Exzenterelement in Eingriff bringbar ist. Die erste Kontur ist exzentrisch zur zweiten Kontur angeordnet und das Exzenterelement ist über ein erstes Befestigungsmittel kraftschlüssig an der Rahmeneinheit und der Justiereinheit festlegbar, und wobei durch Einstellen eines bestimmten Verdrehwinkels des Exzenterelments die Rahmeneinheit und die Justiereinheit in einer vobestimmbaren Position längs einer Justierrichtung gesichert und schwenkbar gegeneinander lagerbar sind. Der Mittelpunkt der ersten Kontur ist um eine Exzentrität vom Mittelpunkt der zweiten Kontur beabstandet und die erste Kontur weist einen Radius R1 und die zweite Kontur zweist einen mittleren Radius R2 auf.

Aufgabe der vorliegenden Erfindung ist es also, eine Achsjustierung für Achsen von Nutzfahrzeugen bereitzustellen, welche auf besonders einfache und sichere Art und Weise die Spureinstellung für eine Nutzfahrzeugachse ermöglicht, um so insbesondere die Betriebssicherheit des Nutzfahrzeugs zu erhöhen, bzw. zu jeder Zeit zu gewährleisten.

Diese Aufgabe wird gelöst mit einer Achsjustierung gemäß dem unabhängigen Anspruch 1. Weitere Vorteile und Merkmale der Erfindung ergeben sich aus den abhängigen Ansprüchen.

Erfindungsgemäß umfasst die Achsjustierung eine Rahmeneinheit, ein Exzenterelement und eine Justiereinheit, wobei das Exzenterelement eine erste Kontur aufweist, über die eine der Einheiten, Rahmeneinheit oder Justiereinheit, mit dem Exzenterelement in Eingriff bringbar ist, wobei das Exzenterelement eine zweite Kontur aufweist, über die die jeweils andere Einheit (d. h. Justiereinheit oder Rahmeneinheit) mit dem Exzenterelement in Eingriff bringbar ist, wobei die erste Kontur exzentrisch zur zweiten Kontur angeordnet ist, wobei das Exzenterelement über ein erstes Befestigungsmittel zumindest kraftschlüssig an der Rahmeneinheit oder der Justiereinheit festlegbar ist,und wobei durch Einstellen eines bestimmten Verdrehwinkels des Exzenterelements die Rahmeneinheit und die Justiereinheit in einer vorbestimmten Position längs einer Justierrichtung L gesichert und schwenkbar gegeneinander lagerbar sind, wobei der Mittelpunkt der ersten Kontur um eine Exzentrizität vom Mittelpunkt der zweiten Kontur beabstandet ist, wobei die erste Kontur einen mittleren Radius R1 und die zweite Kontur einen mittleren Radius R2 aufweist, und wobei das Verhältnis von (R2 - R1 - E) zu (R2) im Bereich von 0,2 bis 0,4 liegt. Die Rahmeneinheit ist bevorzugt ein mit dem Fahrzeugrahmen des Nutzfahrzeuges fest verbundenes Bauteil beispielsweise ein Lagerbock, welches unter anderem die Justiereinheit gegen Verlagerung längs einer Justierrichtung sichert, wobei dies erfindungsgemäß über ein Exzenterelement stattfindet. Bevorzugt ist die Rahmeneinheit aus Blechen oder aus Gussmaterial gebildet, welche ein Tragwerk bilden und insbesondere bevorzugt stoffschlüssig aneinander festgelegt sind. Die Justierrichtung ist bevorzugt die Richtung, in welcher die Justiereinheit verlagert wird, um bevorzugt ein Ende einer Achse des Nutzfahrzeuges derart relativ zum Fahrzeugrahmen bzw. zu dem Fahrwerk des Nutzfahrzeuges zu verlagern, dass die Spur, bzw. die Rollrichtung der an der Achse befestigten Räder korrekt eingestellt ist. Insbesondere bevorzugt ist die Justiereinheit ein länglicher bzw. bevorzugt zylindrischer Körper, der an seinen jeweils gegenüberliegenden Enden zwei Aufnahmepunkte zur Krafteinleitung in die Justiereinheit aufweist. Die Aufnahmepunkte an den Enden der Justiereinheit sind bevorzugt als Lageraugen ausgebildet und nehmen beispielsweise zylindrische Bolzenelemente auf. Ein Ende der Justiereinheit ist dabei bevorzugt mit der starren Achse mittelbar oder unmittelbar verbunden und es wird bei Einstellung der korrekten Position der Justiereinheit längs der Justierrichtung in Relation zum Fahrzeugrahmen gleichzeitig auch die Achse in der korrekten Position gehalten. Insbesondere aufgrund der Verwendung einer starren Justiereinheit, ohne zu einander bewegliche Elemente, wie beispielsweise ein Gewinde, ist die Achsjustierung besonders robust und eignet sich für den Einsatz an Fahrwerken von Nutzfahrzeugen, die hohen Belastungen durch aufgewirbelte Körper und korrosionsfördernden Bedingungen ausgesetzt sind. Das Exzenterelement steht erfindungsgemäß mit der Justiereinheit und der Rahmeneinheit in Eingriff und dient insbesondere bevorzugt der Einstellung der richtigen Position der Justiereinheit relativ zur Rahmeneinheit. Hierfür weist das Exzenterelement eine erste Kontur und eine zweite Kontur auf, wobei die erste Kontur exzentrisch zur zweiten Kontur angeordnet ist und wobei jeweils eine der Einheiten, Rahmeneinheit oder Justiereinheit mit der ersten Kontur in Eingriff steht und die jeweils andere Einheit mit der zweiten Kontur in Eingriff steht. Verdreht man nun das Exzenterelement um eine Rotationsachse, die bevorzugt quer zur Justierrichtung liegt, so verschiebt sich die erste Kontur relativ zur zweiten Kontur längs der Justierrichtung. Entsprechend verschiebt sich auch die jeweils mit der ersten Kontur in Eingriff stehende Einheit relativ zu der mit der zweiten Kontur in Eingriff stehenden Einheit. Gleichzeitig ist es erfindungsgemäß, dass die Rahmeneinheit und die Justiereinheit trotz der Festlegung ihrer relativen Position längs der Justierrichtung zueinander gegeneinander schwenkbar verbleiben. Mit Blick auf die Anwendung im Nutzfahrzeug ist diese schwenkbare Lagerung unerlässlich, da, insbesondere bei einer gefederten Lagerung der Achse, sich die Position der Achse relativ zur Position der Rahmeneinheit auch in vertikaler Richtung, also quer zur Justierrichtung verändert. Es ist daher nötig, dass das an der Achse festgelegte Ende der Justiereinheit dieser Verlagerung folgen kann, während das zweite, am Exzenterelement festgelegte Ende seine Position relativ zum Fahrzeugrahmen behält, wobei entsprechend eine Schwenkbewegung die Folge ist. Das Exzenterelement ist über ein erstes Befestigungsmittel zumindest kraftschlüssig an der Rahmeneinheit oder der Justiereinheit festlegbar. Insbesondere bevorzugt ist das erste Befestigungsmittel vorgesehen, um das Exzenterelement gegen Verdrehung relativ zu einer der beiden Einheiten, Rahmeneinheit oder Justiereinheit zu sichern. Indem die Verdrehung des Exzenterelements be- und/oder verhindert wird, kann bevorzugt auch die Position der ersten Kontur des Exzenterelementes relativ zu der Einheit, an welcher das Exzenterelement über das erste Befestigungsmittel festgelegt ist, gehalten werden und die Justiereinheit ist auf diese Weise in einer Position längs der Justierrichtung relativ zur Rahmeneinheit festgelegt. Insbesondere bevorzugt eignet sich als erstes Befestigungsmittel ein Bolzen, eine Schraube, ein Gewindestab oder eine, an einem Gewinde festgelegte Mutter.

Bevorzugt ist es, dass die erste Kontur oder die zweite Kontur im Wesentlichen kreisförmig ausgebildet ist, wobei die jeweils andere Kontur regelmäßig polygonal oder im Wesentlichen kreisförmig ausgebildet ist. Mit anderen Worten ist es also bevorzugt, dass zumindest eine der beiden Konturen, erste oder zweite Kontur, kreisförmig ausgelegt ist, wobei die jeweils andere Kontur entweder polygonal oder im Wesentlichen auch kreisförmig ausgelegt sein kann. Dieses Merkmal ist insbesondere dafür bevorzugt, dass eine schwenkbare Lagerung der Justiereinheit an der Rahmeneinheit vorgesehen ist, wobei dies eine zumindest im Wesentlichen kreisförmige Kontaktfläche bzw. zylinderförmig oder kegelig ausgebildete Kontaktfläche des Exzenterelementes zu der jeweiligen Einheit, welche zur anderen Einheit schwenkbar ist, bedarf. Die im Wesentlichen kreisförmige Kontur kann dabei bevorzugt auch Rücksprünge aufweisen, die von der Kreisform abweichen, wobei jedoch insbesondere die Kontaktflächen mit einem in die Kontur eingreifenden Element einer Kreisbahn folgen. Regelmäßig polygonal bedeutet im vorliegenden Fall, dass insbesondere gleichseitige Polygone, besonders bevorzugt ein Viereck, ein Sechseck, ein Achteck oder ein Zwölfeck, als Querschnittsfläche für eine der beiden Konturen vorgesehen sind. Insbesondere bevorzugt ist es, dass die polygonale Kontur einen Innenkreis aufweist, wobei der Mittelpunkt des Innenkreises der polygonalen Kontur exzentrisch zum Mittelpunkt der jeweils anderen kreisförmigen Kontur angeordnet ist.

Von Vorteil ist es, wenn der Mittelpunkt der ersten Kontur um eine Exzentrizität vom Mittelpunkt der zweiten Kontur beabstandet ist, wobei die erste Kontur einen mittleren Radius R₁ und die zweite Kontur einen mittleren Radius R₂ aufweist, wobei das Verhältnis von (R₂-R₁-E) zu R₂ erfindungsgemäß im Bereich von 0,2 bis 0,4, und insbesondere bevorzugt bei 0,23 liegt. Es ist hierbei insbesondere zweckmäßig, dass die erste Kontur innerhalb der zweiten Kontur angeordnet ist bzw. die erste Kontur einen kleineren Radius aufweist als die zweite Kontur. Besonders bevorzugt ist die zweite Kontur die Außenkontur des Exzenterelements und weist einen Radius R₂ auf. Weiterhin ist die erste Kontur bevorzugt eine Aussparung im Exzenterelement und weist einen mittleren Radius R₁ auf. Die Differenz des Radius R₂ als Minuend und der Summe des Radius R₁ und der Exzentrizität E als Subtrahend entspricht dabei bevorzugt der verbleibenden Wandstärke des Exzenterelements an seiner dünnwandigsten Stelle im Bereich der ersten Kontur. Je kleiner also das Verhältnis von (R₂-R₁-E) zu (R₂) ist, desto kleiner ist die Wandstärke des Exzenterelements an der dünnsten Stelle, also der Stelle, an welcher eine Aussparung in den Exzenter eingebracht wurde. Dies kann insbesondere dann von Bedeutung sein, wenn das Exzenterelement längs dieser bzw. quer zu dieser geringsten Wandstärke große Kräfte übertragen muss und das Material zum Vermeiden von hohen im Material auftretenden Spannungen an dieser Stelle ausreichend dick ausgelegt sein soll.

Vorzugsweise ist die zweite Kontur des Exzenterelements mit der Rahmeneinheit oder mit der Justiereinheit in unmittelbaren Eingriff bringbar. Ein bevorzugter unmittelbarer Eingriff ist insbesondere dadurch gekennzeichnet, dass keine zusätzlichen, insbesondere losen Bauteile benötigt werden, um das Exzenterelement formschlüssig an der Rahmeneinheit oder der Justiereinheit festzulegen. Es kann auf diese Weise der Montageaufwand für die Festlegung der Justiereinheit in einer bestimmten Position relativ zur Rahmeneinheit mithilfe des Einsatzes eines Exzenterelements deutlich verringert werden.

Weiterhin ist es bevorzugt, dass das Exzenterelement über zweite Befestigungsmittel formschlüssig, zumindest gegen Verlagerung in Justierrichtung relativ zur Rahmeneinheit oder zur Justiereinheit gesichert ist. Die zweiten Befestigungsmittel sind insbesondere bevorzugt Vorsprünge, welche quer zur Justierrichtung oder im Wesentlichen quer zur Justierrichtung ausgerichtete Anschlagflächen aufweisen, an welchen das Exzenterelement zur Anlage kommt und gegen Verlagerung längs der Justierrichtung gesichert ist. In einer besonders bevorzugten Ausführungsform sind die zweiten Befestigungsmittel an der Rahmeneinheit vorgesehen und verhindern, dass sich das Exzenterelement in Justierrichtung relativ zur Rahmeneinheit verlagert, wobei das Exzenterelement gleichzeitig zunächst drehbar relativ zur Rahmeneinheit verbleibt. Besonders bevorzugt sind die zweiten Befestigungsmittel als Vorsprünge oder Backen ausgelegt, welche stoffschlüssig oder formschlüssig oder kraftschlüssig an der jeweiligen Einheit, also Rahmeneinheit oder Justiereinheit festgelegt sein können.

Insbesondere bevorzugt weist die Justiereinheit einen Eingriffsbereich auf, welcher zumindest bereichsweise formschlüssig mit der ersten Kontur des Exzenterelements oder mit dem ersten Befestigungsmittel in Eingriff bringbar ist. Insbesondere bevorzugt ist dabei, dass der Eingriffsbereich zylindrisch ausgelegt ist bzw. im Wesentlichen rotationssymmetrisch, also beispielsweise kegelförmig bzw. konisch. Auf diese Weise ist sichergestellt, dass der Eingriffsbereich der Justiereinheit drehbar bzw. schwenkbar zum Exzenterelement bleibt, wobei insbesondere bevorzugt auch die erste Kontur des Exzenterelements kreisförmig ausgelegt ist. In einer alternativen Ausführungsform kann der Eingriffsbereich der Justiereinheit, dafür ausgelegt sein, mit der zweiten Kontur des Exzenterelements in formschlüssigen Eingriff zu gelangen, wobei in dieser Auslegungsvariante die erste Kontur des Exzenterelements mit dem entsprechenden Befestigungsmittel oder unmittelbar mit der Rahmeneinheit in formschlüssigen Eingriff bringbar ist.

Weiterhin bevorzugt weist die Rahmeneinheit einen Führungsbereich auf, in welchen die erste Kontur des Exzenterelements oder der Eingriffsbereich der Justiereinheit oder das erste Befestigungselement zumindest bereichsweise formschlüssig eingreift, um den Eingriffsbereich der Justiereinheit gegen Verlagerung quer zur Justierrichtung relativ zum Rahmenelement zu sichern. Insbesondere bevorzugt ist es, dass der Führungsbereich der Rahmeneinheit ein Langloch ist, also eine längliche Aussparung in der Rahmeneinheit, welches sich im Wesentlichen längs der Justierrichtung erstreckt. Insbesondere bevorzugt sind die beiden langen Flanken bzw. Seitenflächen des Führungsbereiches um zumindest den Abstand des doppelten Radius der jeweiligen Kontur, welche in den Führungsbereich eingreift, voneinander beabstandet. Alternativ hierzu kann der Führungsbereich der Rahmeneinheit auch als länglich ausgebildeter Vorsprung ausgelegt sein, an welchem eine entsprechende Nut, oder ein entsprechender Rücksprung formschlüssig eingreift, um das jeweils mit der Rahmeneinheit korrespondierende Teil längs der Justierrichtung zu führen. Die Erstreckung des Führungsbereiches längs der Justierrichtung ist dabei mindestens so groß wie die Exzentrizität der ersten Kontur von der zweiten Kontur des Exzenterelements.

Ferner bevorzugt ist es, dass der Eingriffsbereich der Justiereinheit als Aussparung ausgebildet ist, wobei die erste Kontur des Exzenterelements als Vorsprung ausgebildet ist und zumindest bereichsweise formschlüssig in den Eingriffsbereich eingreift. Bei dieser bevorzugten Ausführungsform ist der Eingriffsbereich der Justiereinheit, bevorzugt als Rücksprung bzw. als Bohrung oder Aussparung ausgebildet, wobei besonders bevorzugt ein Lagerauge am Eingriffsbereich vorgesehen sein kann. In die Aussparung des Eingriffsbereiches greift zumindest bereichsweise formschlüssig die erste Kontur des Exzenterelements ein, wobei insbesondere bevorzugt ist, dass sowohl der Eingriffsbereich als auch die erste Kontur kreisförmig bzw. zylinderförmig ausgelegt sind.

In einer weiteren bevorzugten Ausführungsform ist das erste Befestigungselement zumindest bereichsweise in formschlüssigen Eingriff mit dem Führungsbereich der Rahmeneinheit und der ersten Kontur des Exzenterelementes und dem Eingriffsbereich der Justiereinheit bringbar. Diese bevorzugte Ausführungsform kann das erste Befestigungselement, beispielsweise ein Bolzen oder eine Schraube sein, welche durch die als bevorzugte Rücksprung bzw. Aussparung ausgelegten Bereiche, Führungsbereich der Rahmeneinheit, erste Kontur und Eingriffsbereich der Justiereinheit hindurchgeführt wird und diese sowohl formschlüssig als auch, sofern eine Schraube vorgesehen ist, kraftschlüssig aneinander festzulegen. Damit die schwenkbare Lagerung der Justiereinheit relativ zur Rahmeneinheit gewährleistet ist, ist es bevorzugt, dass Unterlegscheiben oder Gummilagerungen an den entsprechenden Stellen vorgesehen sind, welche aneinander gleiten können und auf diese Weise ermöglichen, dass trotz der kraftschlüssigen und formschlüssigen Festlegung der Rahmeneinheit mit dem Exzenterelement und der Justiereinheit eine schwenkbare Lagerung gewährleistet bleibt.

Insbesondere bevorzugt ist es, dass die erste Kontur und die zweite Kontur des Exzenterelementes kreisförmig ausgebildet sind, um das Exzenterelement mit beliebigen Verdrehwinkeln an der Rahmeneinheit festzulegen, um eine stufenlose Einstellung der Position der Justiereinheit relativ zur Rahmeneinheit längs der Justierrichtung L zu ermöglichen. Insbesondere bevorzugt ist es, dass der Verschiebeweg x der Justiereinheit relativ zur Rahmeneinheit einer Funktion des Verdrehwinkels α des Exzenterelementes ist. Dabei ist der Verschiebeweg der Justiereinheit relativ zur Rahmeneinheit insbesondere bevorzugt eine Funktion des Kosinus von dem Verdrehwinkel α und der Exzentrizität der Mittelpunkte der ersten Kontur und der zweiten Kontur (Formel: *x* = ± cos*α* · *E* )*.* Bei einer kreisförmig ausgelegten Außenkontur bzw. zweiten Kontur des Exzenterelementes ist es möglich, eine stufenlose Winkelverstellung des Exzenterelementes relativ zur Rahmeneinheit vorzunehmen, wobei ebenfalls eine stufenlose Einstellung der Verschiebeposition der Justiereinheit relativ zur Rahmeneinheit gewährleistet ist. Es ist jedoch bei dieser Auslegungsform darauf zu achten, dass insbesondere bei einer stark exzentrischen Auslegung der ersten Kontur relativ zur zweiten Kontur, hohe Momente bzw. Drehmomente auftreten, welche das Exzenterelement relativ zur Rahmeneinheit verlagern können und es muss entsprechend Vorsorge getroffen werden, um das Exzenterelement in der bevorzugten Position zu halten. Insbesondere bevorzugt kann hierfür das Exzenterelement mittels eines Schweißpunktes oder einer Vielzahl von Schweißpunkten in der gewünschten Position festgelegt bzw. stoffschlüssig festgelegt sein.

In einer alternativ dazu bevorzugten Ausführungsform ist die zweite Kontur des Exzenterelementes regelmäßig polygonal ausgebildet, wobei die zweiten Befestigungsmittel das Exzenterelement gegen Verdrehung relativ zur Rahmeneinheit sichern und wobei die Anzahl der Ecken der polygonalen zweiten Kontur die Anzahl an möglichen Verdrehwinkeln des Exzenterelements vorgibt und entsprechend halb so viele Verschiebepositionen in Justierrichtung wie Verdrehwinkel einstellbar sind. Alternativ zu der kreisförmigen Kontur des Exzenterelementes kann diese bevorzugt auch polygonal ausgebildet sein. Bevorzugt ist hierbei insbesondere eine geradzahlige Anzahl von Ecken des jeweiligen Polygons, weil auf diese Weise gewährleistet ist, dass jeweils zwei gegenüberliegende zueinander parallele Seiten vorhanden sind, welche wiederum geeignet sind, mit dem zweiten Befestigungsmittel in Eingriff zu gelangen und entsprechend sowohl gegen Verlagerung längs der Justierrichtung als auch gegen Verdrehung gesichert sind. Bevorzugt ist es, dass das Exzenterelement, während es sich in der Position, in welcher der Formschluss mit den zweiten Befestigungsmitteln hergestellt ist, befindet, nicht verdreht werden kann, wobei eine hohe Sicherheit gegen Verdrehung des Exzenterelements bei Auftreten hoher Kräfte gegeben ist. Zur Erleichterung der Montage bzw. der korrekten Einstellung des Exzenterelementes im eingebauten Zustand kann es bevorzugt sein, dass die zweiten Befestigungsmittel als separate Bauteile ausgelegt sind, welche während des Einstellvorgangs des richtigen Verdrehwinkels des Exzenterelementes von der Rahmeneinheit abgenommen werden können und nach Abschluss des Einstellvorgangs am Rahmenelement festgelegt werden können und in formschlüssigen Eingriff mit der zweiten Kontur des Exzenterelements gelangen. Alternativ kann es auch bevorzugt sein, dass die erste Kontur des Exzenterelements regelmäßig polygonal ausgebildet ist, wobei entsprechend die zweite Kontur kreisförmig ausgebildet ist und wobei entsprechend darauf geachtet werden muss, dass die jeweils mit der ersten Kontur korrespondierende Geometrie des ersten Befestigungselements oder der Eingriffsbereich der Justiereinheit korrespondierend mit der polygonalen Auslegung ist.

Weitere Vorteile und Merkmale ergeben sich aus der nachfolgenden Beschreibung bevorzugter Ausführungsformen der erfindungsgemäßen Achsjustierung mit Bezug auf die beigefügten Figuren. Es versteht sich, dass einzelne Merkmale der verschiedenen gezeigten Ausführungsformen im Rahmen der Erfindung miteinander kombiniert werden können.

Es zeigen:
- Fig. 1: eine Ansicht einer bevorzugten Ausführungsform der erfindungsgemäßen Achsjustierung,
- Fig. 2: eine Schnittansicht der in Fig. 1 gezeigten bevorzugten Ausführungsform der erfindungsgemäßen Achsjustierung,
- Fig. 3: eine Schnittansicht einer alternativen Ausführungsform der erfindungsgemäßen Achsjustierung,
- Fig. 4: eine Schnittansicht einer weiteren bevorzugten Ausführungsform der erfindungsgemäßen Achsjustierung,
- Fig. 5: eine Ansicht einer bevorzugten Ausführungsform der erfindungsgemäßen Achsjustierung,
- Fig. 6: eine Schnittansicht der in Fig. 5 gezeigten bevorzugten Ausführungsform der erfindungsgemäßen Achsjustierung,
- Fig. 7: eine Prinzipskizze der geometrischen Verhältnisse am Exzenterelement, und
- Fig. 8: eine Schnittansicht einer bevorzugten Ausführungsform der erfindungsgemäßen Achsjustierung.

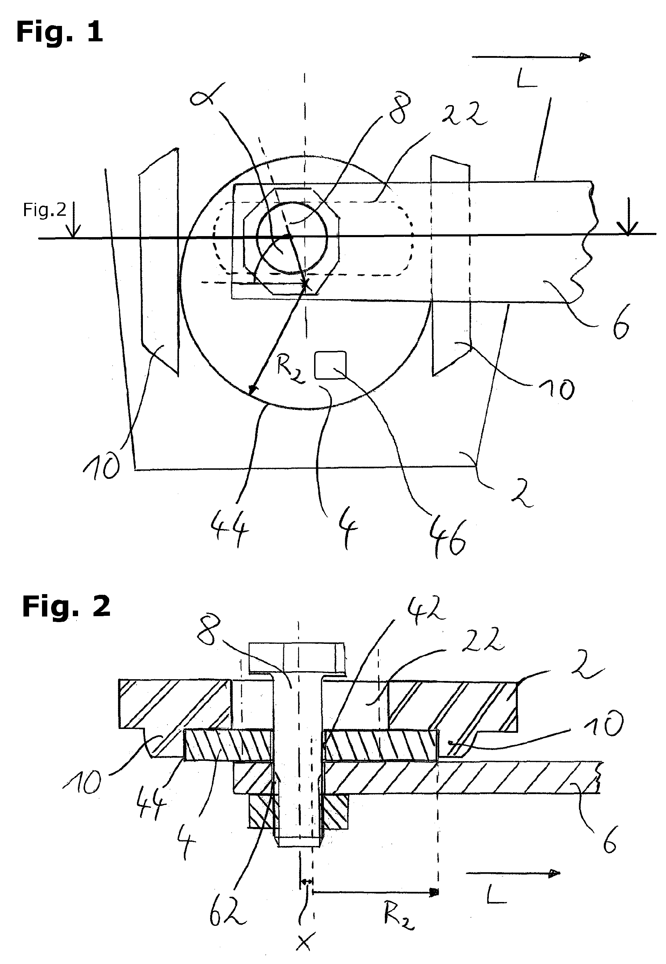

Fig. 1 zeigt eine Seitenansicht einer bevorzugten Ausführungsform der erfindungsgemäßen Achsjustierung. Es ist erfindungsgemäß eine Rahmeneinheit 2, ein Exzenterelement 4 und eine Justiereinheit 6 vorgesehen, wobei die Justiereinheit über ein erstes Befestigungsmittel 8 und das Exzenterelement 4 mit der Rahmeneinheit 2 verbunden ist. Das Exzenterelement 4 weist eine zweite Kontur 44 auf, die kreisförmig ausgelegt ist, wobei die kreisförmige zweite Kontur 44 einen Radius R2 aufweist. Weiterhin weist das Exzenterelement 4 eine erste Kontur 42 auf, die ebenfalls kreisförmig bzw. bevorzugt ebenfalls kreisförmig ausgelegt ist und deren Mittelpunkt vom Mittelpunkt der zweiten Kontur beabstandet ist. Mit anderen Worten ist die erste Kontur 42 exzentrisch zur zweiten Kontur 44 des Exzenterelements angeordnet. Das Exzenterelement 4 stützt sich gegen Verlagerung in Justierrichtung L gegen zwei jeweils gegenüberliegende zweite Befestigungsmittel 10 ab, welche mittels eines formschlüssigen Eingriffes eine Verlagerung des Exzenterelements 4 in Justierrichtung L verhindern. Wird nun das Exzenterelement 4 um einen Verdrehwinkel α verdreht, so erfährt die erste Kontur 42 eine Verlagerung in Justierrichtung L, da das Exzenterelement 4 sich an den zweiten Befestigungsmitteln 10 abstützt und so gegen Verlagerung in Justierrichtung L gesichert ist. Bevorzugt steht die Justiereinheit 6 mittelbar oder unmittelbar mit der ersten Kontur 42 in Eingriff, wobei bei der Verlagerung der ersten Kontur 42 in Justierrichtung L auch die Justiereinheit 6 eine Verlagerung in Justierrichtung L erfährt. In alternativ bevorzugter Ausführungsform ist die Justiereinheit 6 über ein erstes Befestigungsmittel 8, welches insbesondere bevorzugt einen Kraftschluss und einen Formschluss zwischen der ersten Kontur 42 und einem nicht gezeigten Eingriffsbereich 62 der Justiereinheit 6 herstellt und auf diese Weise die Justiereinheit 6 an der ersten Kontur 42 festlegt. Weiterhin ist mit einer gestrichelten Linie der Führungsbereich 22 der Rahmeneinheit 2 gezeigt, welcher insbesondere dazu dient zu verhindern, dass sich die Justiereinheit 6 quer zur Justierrichtung L verlagert. Es ist bevorzugt an der Vorderseite des Exzenterelements 4 eine Handhabungshilfe 46 vorgesehen, welche beispielsweise als Vorsprung, bzw. als Handkurbel ausgelegt ist. Über die Handhabungshilfe 46 ist es für den Anwender besonders einfach, das Exzenterelement 4 relativ zur Rahmeneinheit zu verdrehen.

Fig. 2 zeigt die bereits in Fig. 1 angedeutete Schnittansicht der in Fig. 1 gezeigten bevorzugten Ausführungsform. Dabei ist insbesondere deutlich zu erkennen, dass das erste Befestigungsmittel 8 sowohl durch den Führungsbereich 22 des Rahmenelementes 2 als auch durch die erste Kontur 42 des Exzenterelements 4 und durch den Eingriffsbereich 62 der Justiereinheit 6 hindurchreicht und diese Teile bzw. Einheiten formschlüssig aneinander festlegt. In dieser bevorzugten Ausführungsform ist also der Eingriffsbereich 62 der Justiereinheit 6 und auch die erste Kontur des Exzenterelements 4 als Aussparung bzw. Bohrung ausgelegt, wobei insbesondere bevorzugt eine kreisförmige bzw. zylindrische Geometrie vorgesehen ist, in welche wiederum ein zylindrischer Körper, wie beispielsweise ein Bolzen oder eine Schraube eingreifen kann. Mittels der gestrichelten Linien ist auch die Position des Mittelpunkts der ersten Kontur 42 relativ zur Position des Mittelpunkts der zweiten Kontur 44 gezeigt. Diese Position bzw. dieser Versatz in Justierrichtung L wird mit dem Buchstaben x bezeichnet. Darüber hinaus ist in dieser Ausführungsform das zweite Befestigungsmittel 10 einstückig mit der Rahmeneinheit 2 ausgeführt, wobei insbesondere bevorzugt zwei sich gegenüberliegende zweite Befestigungsmittel 10 vorgesehen sind, die das Exzenterelement 4 gegen Verlagerung sowohl in positiver als auch in negativer Justierrichtung L sichern. Das erste Befestigungsmittel 8 ist insbesondere bevorzugt als Schraube ausgelegt, wobei gegenüber dem Schraubenkopf, also in der Figur auf der Oberseite gezeigt, eine Mutter vorgesehen ist, welche einen Kraftschluss zwischen den von der Schraube durchdrungenen Elementen bzw. Einheiten herstellt. Insbesondere bevorzugt ist es dabei, dass in der Figur nicht gezeigte Unterlegscheiben verwendet werden, um auch bei bestehendem Kraftschluss eine Schwenkbarkeit der Justiereinheit 6 gegenüber der Rahmeneinheit 2 zu ermöglichen, wobei während dieses Vorgangs die Unterlegscheiben aneinander gleiten.

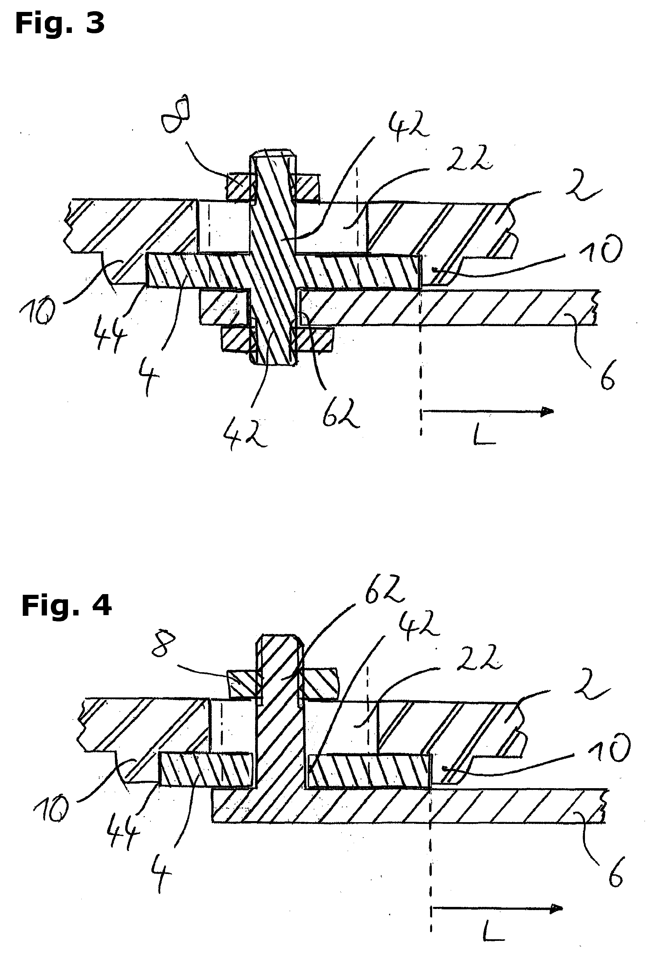

Fig. 3 zeigt eine weitere Schnittansicht einer bevorzugten Ausführungsform der erfindungsgemäßen Achsjustierung, wobei insbesondere bevorzugt die erste Kontur 42 als Vorsprung ausgelegt ist, insbesondere bevorzugt als bolzenförmiger bzw. zylindrischer Vorsprung, welcher in zwei Richtungen quer zur Justierrichtung L vom Exzenterelement absteht. Dabei greift der nach unten ragende Teil der ersten Kontur 42 formschlüssig in den als Rücksprung bzw. Aussparung ausgebildeten Eingriffsbereich 62 der Justiereinheit 6 ein und wird an seinem aus letzterem herausragenden Ende durch eine Mutter form- und kraftschlüssig festgelegt. Weiterhin greift der nach oben ragende Teil der ersten Kontur 42 formschlüssig in den Führungsbereich 22 der Rahmeneinheit 2 ein und sichert das Exzenterelement 4 gegen Verlagerung quer zur Justierrichtung L. Im vorliegenden Fall ist das erste Befestigungsmittel 8 insbesondere bevorzugt als Mutter ausgelegt, welche formund kraftschlüssig in ein dafür vorgesehenes Gewinde am Exzenterelement 4 bzw. an der ersten Kontur 42 eingreift.

In Fig. 4 ist eine weitere Schnittansicht einer bevorzugten Ausführungsform der erfindungsgemäßen Achsjustierung gezeigt, wobei in dieser Ausführungsform der Eingriffsbereich 62 der Justiereinheit 6 als Vorsprung ausgebildet ist, welcher durch die als Aussparung ausgebildete erste Kontur 42 und durch den Führungsbereich 22 der Rahmeneinheit 2 hindurchragt und an seinem distalen, in der Figur oberen, Ende durch das erste Befestigungsmittel 8 im formschlüssigen und kraftschlüssigen Eingriff gehalten wird. Insbesondere bevorzugt stützt sich das erste Befestigungsmittel 8 gegenüber der Rahmeneinheit 2 über eine oder eine Vielzahl von Unterlegscheiben (in der Figur nicht gezeigt) ab, um eine Verdrehbewegung bzw. Schwenkbewegung der Justiereinheit 6 und damit auch des Eingriffsbereiches 62 der Justiereinheit 6 gegenüber der Rahmeneinheit 2 ausführen zu können, ohne dass dabei das erste Befestigungsmittel 8 vom Eingriffsbereich 62 gelöst wird.

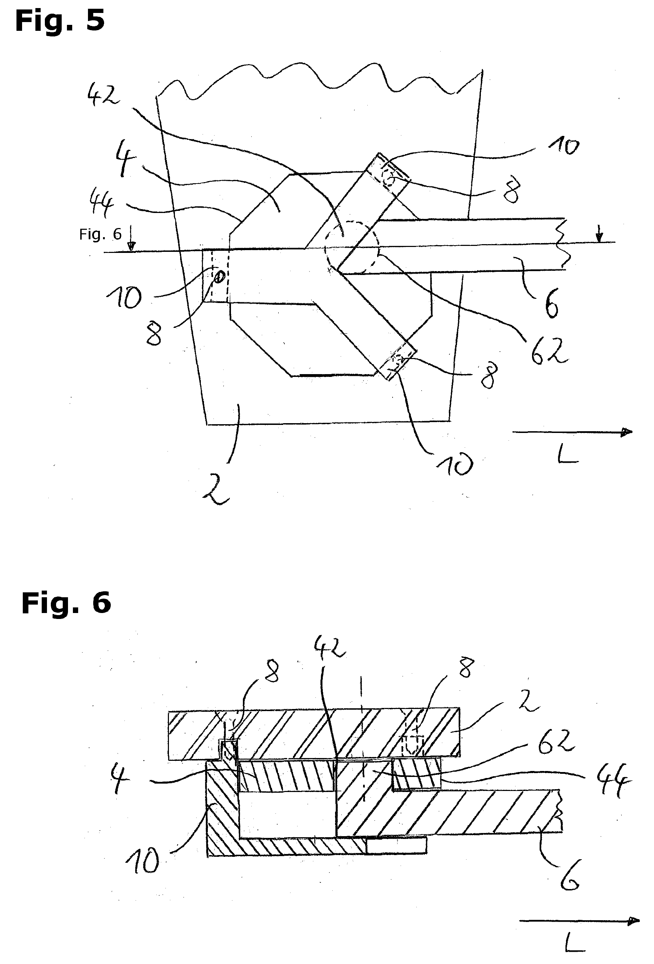

Fig. 5 zeigt eine Ansicht einer weiteren Ausführungsform der erfindungsgemäßen Achsjustierung, wobei insbesondere bevorzugt das Exzenterelement 4 eine als gleichmäßiges bzw. regelmäßiges Polygon ausgelegte zweite Kontur 44 aufweist. Versetzt zum Mittelpunkt des Innenkreises der zweiten Kontur 44 ist die erste Kontur 42 vorgesehen, wobei diese bevorzugt kreisförmig ausgelegt ist und mit dem Eingriffsbereich 62 der Justiereinheit 6 in formschlüssigem Eingriff steht. Weiterhin sind bevorzugt zwei bzw. wie in der Figur gezeigt drei zweite Befestigungsmittel 10 vorgesehen, welche das Exzenterelement 4 gegen Verlagerung längs der Justierrichtung L formschlüssig sichern. In der hier gezeigten bevorzugten Ausführungsform sichern die zweiten Befestigungsmittel 10 das Exzenterelement 4 auch gegen Verlagerung quer zur Justierrichtung L, da die in der Figur rechts gezeigten zweiten Befestigungsmittel 10 auch Haltekräfte quer zur Justierrichtung L auf das Exzenterelement 4 übertragen können. In dieser bevorzugten Ausführungsform ist es also möglich, das Exzenterelement 4 in definierten bzw. diskreten Winkelpositionen bzw. Verdrehwinkeln α relativ zur Rahmeneinheit 2 bzw. relativ zu den zweiten Befestigungsmitteln 10 anzuordnen, wobei die Anzahl der zur Verfügung stehenden Anordnungspositionen des Exzenterelements 4 von der Anzahl seiner Ecken abhängt. Im vorliegenden Fall kann das Exzenterelement 4 also in acht Verdrehwinkelpositionen an der Rahmeneinheit 2 angeordnet werden. Die zweiten Befestigungsmittel 10 greifen formschlüssig an der Rahmeneinheit 2 ein und sind auf diese Weise gegen Verlagerung längs und quer zur Justierrichtung L gesichert, wobei die ersten Befestigungsmittel 8 derart ausgelegt sind, dass sie die zweiten Befestigungsmittel 10 in der formschlüssigen Position relativ zur Rahmeneinheit 2 halten. Es ist bevorzugt, dass die beiden in der Figur gezeigten rechten zweiten Befestigungsmittel 10 quer zur Justierrichtung L derart voneinander beabstandet sind, dass die Justiereinheit 6 bei maximaler Auslenkung, also in maximal oberer oder maximal unterer Position bzw. bei einem Verdrehwinkel α von plus oder minus 90 Grad nicht an den zweiten Befestigungsmitteln 10 anstößt.

Fig. 6 zeigt eine Schnittansicht der bereits in Fig. 5 gezeigten bevorzugten Ausführungsform, wobei erkennbar ist, dass die zweiten Befestigungsmittel 10 über einen Steg, in der Figur an der Unterseite gezeigt, miteinander verbunden sind und in formschlüssigem Eingriff mit der Rahmeneinheit 2 stehen, wobei die Befestigungsmittel 8 derart angeordnet sind, dass sie durch die Rahmeneinheit 2 hindurchreichen und form- bzw. kraftschlüssig in den zweiten Befestigungsmitteln 10 eingreifen, um diese in der Position, in welcher ein Formschluss mit der Rahmeneinheit 2 gewährleistet ist, zu halten. Weiterhin ist gezeigt, dass der Eingriffsbereich 62 der Justiereinheit 6 formschlüssig in die als Aussparung ausgebildete erste Kontur 42 eingreift, wobei die erste Kontur 42 und der Eingriffsbereich 62 insbesondere bevorzugt zylindrisch ausgelegt sind. Ein weiterer Vorzug dieser bevorzugten Ausführungsform ist, dass der Steg, welcher die zweiten Befestigungsmittel 10 miteinander verbindet, auch die Justiereinheit 6 an der Verlagerung quer zur Justierrichtung L hindert. Insbesondere wird die Justiereinheit 6 somit in der Position, in welcher der formschlüssige Eingriff mit der ersten Kontur 42 gegeben ist, gehalten. Vorteilhaft ist es weiterhin, wenn die zweiten Befestigungsmittel 10 derart von der Rahmeneinheit 2 abstehen, dass sowohl das Exzenterelement 4 als auch die Justiereinheit 6 zwischen dem die zweiten Befestigungsmittel 10 verbindenden Steg und der Rahmeneinheit 2 angeordnet werden können.

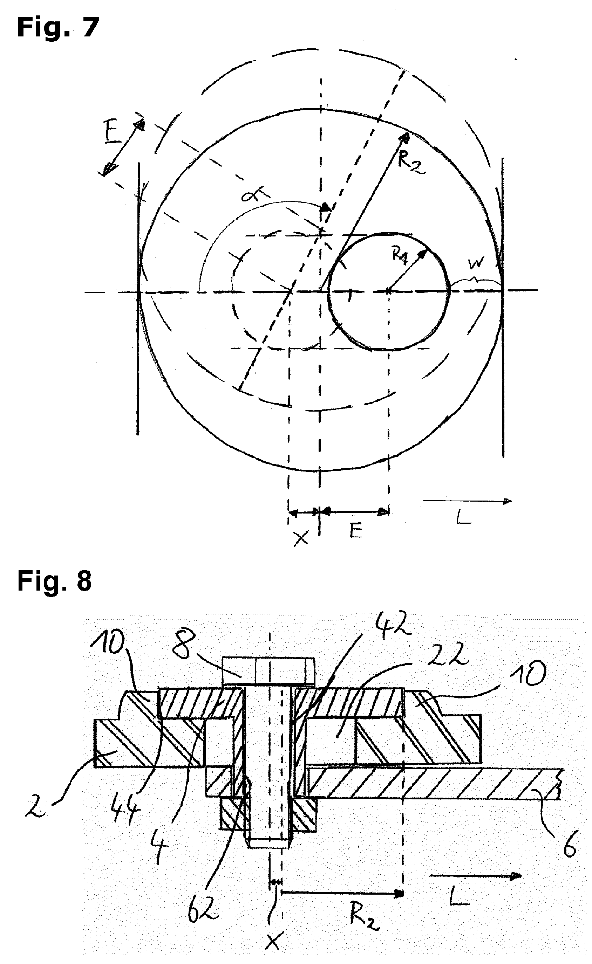

Fig. 7 zeigt eine geometrische Ansicht bzw. Prinzipskizze der exzentrischen Verlagerung der ersten Kontur 42 bei Verdrehung des Exzenterelements 4 um einen Verdrehwinkel α. Bevorzugt sind dabei sowohl die erste Kontur 42 als auch die zweite Kontur 44 kreisförmig ausgelegt, wobei die Mittelpunkte der beiden Konturen um eine Exzentrizität E von einander beabstandet sind, wobei die Position des Mittelpunkts der ersten Kontur 42 in Justierrichtung relativ zum Mittelpunkt der zweiten Kontur 44 eine Funktion des Verdrehwinkels und der Exzentrizität E ist. Bei einem Verdrehwinkel α = 0° ist der Verschiebeweg x des Mittelpunkts der ersten Kontur 42 längs der Justierrichtung L gleich der Exzentrizität E. Bei einem Verdrehwinkel α ungleich 0° ist der Verschiebeweg x des Mittelpunkts der verschobenen ersten Kontur 42' längs der Justierrichtung L eine Funktion der Exzentrizität E und des Winkels α. Weiterhin gezeigt ist auch, dass wenn der Mittelpunkt der ersten Kontur 42 auf einer horizontalen bzw. parallel zur Justierrichtung L verlaufenden Linie geführt wird, wie dies z. B. durch den Führungsbereich 22 gewährleistet ist, muss sich das Exzenterelement 4 bei einer Verdrehung quer zur Justierrichtung L verlagern. Die Folge ist ein vertikaler Versatz der verschobenen zweiten Kontur 44' im Vergleich zur nicht verschobenen zweiten Kontur 44. In der Figur rechts gezeigt ist die Wandstärke w, welche eine Funktion des Radius' R1 der ersten Kontur 42, des Radius' R2 der zweiten Kontur 44 und der Exzentrizität ist. Fig. 8 zeigt eine Schnittansicht einer weiteren bevorzugten Ausführungsform der erfindungsgemäßen Achsjustierung, wobei das Exzenterelement 4 eine erste Kontur 42 aufweist, die bevorzugt rohr-, bzw. hülsenförmig ausgelegt ist. Die erste Kontur 42 greift dabei bevorzugt mit ihrer äußeren Mantelfläche in den als Aussparung ausgelegten Eingriffsbereich 62 der Justiereinheit 6 ein. Weiterhin bevorzugt sind die zweiten Befestigungsmittel 10 auf der der Justiereinheit 6 gegenüber liegenden Seite der Rahmeneinheit 2 vorgesehen. In die bevorzugt hülsenförmig ausgelegte erste Kontur 42 kann das mit Vorteil als Schraube ausgelegte erste Befestigungsmittel 8 eingeführt werden, und durch eine am unteren Ende der ersten Kontur 42 vorgesehene Mutter festgelegt werden.

**Bezugszeichenliste:**

| | | | |
|---|---|---|---|
| 2 | - Rahmeneinheit | 46 | - Handhabungshilfe |
| 4 | - Exzenterelement | 62 | - Eingriffsbereich |
| 6 | - Justiereinheit | L | - Justierrichtung |
| 8 | - erste Befestigungsmittel | α | - Verdrehwinkel |
| 10 | - zweite Befestigungsmittel | R1 | - Radius Innenkontur |
| 22 | - Führungsbereich | R2 | - Radius Außenkontur |
| 42 | - erste Kontur | E | - Exzentrizität |
| 42' | - verschobene erste Kontur | w | - Wandstärke |
| 44 | - zweite Kontur | X | - Position in Justierrichtung |
| 44' | - verschobene zweite Kontur | | |

## Patentansprüche

1. Achsjustierung für Achsen, wie blattgefederte Achsen, von Nutzfahrzeugen, umfassend eine Rahmeneinheit (2), ein Exzenterelement (4) und eine Justiereinheit (6),
wobei das Exzenterelement (4) eine erste Kontur (42) aufweist, über die eine der Einheiten Rahmeneinheit (2) oder Justiereinheit (6) mit dem Exzenterelement (4) in Eingriff bringbar ist,
wobei das Exzenterelement (4) eine zweite Kontur (44) aufweist, über die die jeweils andere Einheit mit dem Exzenterelement (4) in Eingriff bringbar ist, wobei die erste Kontur (42) exzentrisch zur zweiten Kontur (44) angeordnet ist,
wobei das Exzenterelement (4) über ein erstes Befestigungsmittel (8) zumindest kraftschlüssig an der Rahmeneinheit (2) oder der Justiereinheit (6) festlegbar ist, und
wobei durch Einstellen eines bestimmten Verdrehwinkels (α) des Exzenterelements (4) die Rahmeneinheit (2) und die Justiereinheit (6) in einer vorbestimmbaren Position längs einer Justierrichtung (L) gesichert und schwenkbar gegeneinander lagerbar sind,
wobei der Mittelpunkt der ersten Kontur (42) um eine Exzentrizität (E) vom Mittelpunkt der zweiten Kontur (44) beabstandet ist, und
wobei die erste Kontur (42) einen mittleren Radius (R1) und die zweite Kontur (44) einen mittleren Radius (R2) aufweist,
**dadurch gekennzeichnet, dass**
das Verhältnis von (R2 - R1 - E) zu (R2) im Bereich von 0,2 bis 0,4 liegt.

2. Achsjustierung nach Anspruch 1,
wobei die erste Kontur (42) oder zweite Kontur (44) im Wesentlichen kreisförmig ausgebildet ist, und
wobei die jeweils andere Kontur (42, 44) regelmäßig polygonal oder im Wesentlichen kreisförmig ausgebildet ist.

3. Achsjustierung nach einem der vorhergehenden Ansprüche,
wobei das Verhältnis von (R2 - R1 - E) zu (R2) bei 0,23 liegt.

4. Achsjustierung nach einem der vorhergehenden Ansprüche,
wobei die zweite Kontur (44) des Exzenterelements (4) mit der Rahmeneinheit (2) oder mit der Justiereinheit (6) in unmittelbaren Eingriff bringbar ist.

5. Achsjustierung nach einem der vorhergehenden Ansprüche,
wobei das Exzenterelement (4) über zweite Befestigungsmittel (10) formschlüssig zumindest gegen Verlagerung in Justierrichtung (L) relativ zur Rahmeneinheit (2) oder zur Justiereinheit (6) sicherbar ist.

6. Achsjustierung nach einem der vorhergehenden Ansprüche,
wobei die Justiereinheit (6) einen Eingriffsbereich (62) aufweist, welcher zumindest bereichsweise formschlüssig mit der ersten Kontur (42) des Exzenterelements (4) oder mit dem ersten Befestigungsmittel (8) in Eingriff bringbar ist.

7. Achsjustierung nach Anspruch 6,
wobei die Rahmeneinheit (2) einen Führungsbereich (22) aufweist, in welchen die erste Kontur (42) des Exzenterelements (4) oder der Eingriffsbereich (62) der Justiereinheit (6) oder das erste Befestigungselement (8) zumindest bereichsweise formschlüssig eingreift, um den Eingriffsbereich (62) der Justiereinheit (6) gegen Verlagerung quer zur Justierrichtung (L) relativ zur Rahmeneinheit (2) zu sichern.

8. Achsjustierung nach Anspruch 6 oder 7,
wobei der Eingriffsbereich (62) der Justiereinheit (6) als Aussparung ausgebildet ist, und
wobei die erste Kontur (42) des Exzenterelements (4) als Vorsprung ausgebildet ist und zumindest bereichsweise formschlüssig in den Eingriffsbereich (62) eingreift.

9. Achsjustierung nach Anspruch 5 oder 6,
wobei das erste Befestigungselement (8) zumindest bereichsweise in formschlüssigen Eingriff mit dem Führungsbereich (22) der Rahmeneinheit (2) und der ersten Kontur (42) des Exzenterelements (4) und dem Eingriffsbereich (62) der Justiereinheit (6) bringbar ist.

10. Achsjustierung nach einem der vorhergehenden Ansprüche,
wobei die erste Kontur (42) und die zweite Kontur (44) des Exzenterelements (4) kreisförmig ausgebildet sind, um das Exzenterelement (4) mit beliebigen Verdrehwinkeln (α) an der Rahmeneinheit (2) festzulegen, um eine stufenlose Einstellung der Position der Justiereinheit (6) relativ zur Rahmeneinheit (2) längs der Justierrichtung (L) zu ermöglichen.

11. Achsjustierung nach einem der Ansprüche 1 bis 9,
wobei die zweite Kontur (44) des Exzenterelements (4) regelmäßig polygonal ausgebildet ist,
wobei die zweiten Befestigungsmittel (10) das Exzenterelement (4) gegen Verdrehung relativ zur Rahmeneinheit (2) sichern.

## Claims

1. Axle adjustment means for axles, such as leaf-sprung axles, of utility vehicles,
comprising a frame unit (2), an eccentric element (4), and an adjustment unit (6), wherein the eccentric element (4) has a first contour (42), by means of which one of the units, the frame unit (2) or the adjustment unit (6), can be brought into engagement with the eccentric element (4),
wherein the eccentric element (4) has a second contour (44), by means of which the respective other unit can be brought into engagement with the eccentric element (4),
wherein the first contour (42) is arranged eccentric to the second contour (44), wherein the eccentric element (4) can be at least friction-locked to the frame unit (2) or the adjustment unit (6) by means of a first fastening means (8), and wherein the frame unit (2) and the adjustment unit (6) are secured in a predeterminable position in or along an adjustment direction (L) and supported pivotably relative to each other by setting a certain angle of twist or rotation (α) of the eccentric element (4),
wherein the center of the first contour (42) is spaced apart from the center of the second contour (44) by an eccentricity (E),
wherein the first contour (42) has a mean radius (R₁), and the second contour (44) has a mean radius (R₂), and
wherein the relationship of (R₂ - R₁ - E) to (R₂) is in a range of 0.2 to 0.4.

2. The axle adjustment means of claim 1,
wherein the first contour (42) or the second contour (44) is formed essentially circular, and
wherein the respective other contour (42, 44) is formed regularly polygonal or essentially circular.

3. The axle adjustment means of any one of the preceding claims,
wherein the relationship of (R₂ - R₁ - E) to (R₂) is 0.23.

4. The axle adjustment means of any one of the preceding claims,
wherein the second contour (44) of the eccentric element (4) may be brought into direct engagement with the frame unit (2) or with the adjustment unit (6).

5. The axle adjustment means of any one of the preceding claims,
wherein by means of second fastening means (10) the eccentric element (4) may be secured positively or form-fittingly at least against displacement in the adjustment direction (L) relative to the frame unit (2) or the adjustment unit (6).

6. The axle adjustment means of any one of the preceding claims,
wherein the adjustment unit (6) has an engagement portion (62), which at least over a certain area may be made to positively or form-fittingly engage the first contour (42) of the eccentric element (4) or the first fastening means (8).

7. The axle adjustment means of claim 6,
wherein the frame unit (2) has a guiding portion (22), which is at least over a certain area positively or form-fittingly engaged by the first contour (42) of the eccentric element (4) or by the engagement portion (62) of the adjustment means (6) or by the first fastening means (8), so as to secure the engagement portion (62) of the adjustment means (6) against displacement transverse to the adjustment direction (L) relative to the frame unit (2).

8. The axle adjustment means of claim 6 or 7,
wherein the engagement portion (62) of the adjustment unit (6) is designed as a cavity, and
wherein the first contour (42) of the eccentric element (4) is designed as a projection and positively or form-fittingly engages the engagement portion (62) at least over a certain area.

9. The axle adjustment means of claim 5 or 6,
wherein the first fastening means (8) may be made to positively or form-fittingly engage the guiding portion (22) of the frame unit (2) and the first contour (42) of the eccentric element (4) and the engagement portion (62) of the adjustment unit (6) at least over a certain area.

10. The axle adjustment means of any one of the preceding claims,
wherein the first contour (42) and the second contour (44) of the eccentric element (4) are formed circular so as to fix the eccentric element (4) to the frame unit (2) at any angle of rotation (α) so as to allow for a continuous or stageless setting or alignment of the position of the adjustment unit (6) relative to the frame unit (2) along the adjustment direction (L).

11. The axle adjustment means of any one of claims 1 to 9,
wherein the second contour (44) of the eccentric element (4) is formed regularly polygonal,
wherein the second fastening means (10) secure the eccentric element (4) against rotation or twisting relative to the frame unit (2).

## Revendications

1. Dispositif d'ajustement pour essieux, tels que des essieux avec suspension à lame, de véhicules utilitaires, incluant une unité fonnant cadre (2), un élément excentrique (4) et une unité d'ajustement (6), dans lequel l'élément excentrique (4) présente un premier contour (42) via lequel l'une des unités parmi l'unité formant cadre (2) ou l'unité d'ajustement (6) peut être amenée en engagement avec l'élément excentrique (4),
dans lequel l'élément excentrique (4) présente un second contour (44) via lequel l'autre unité respective peut être amenée en engagement avec l'élément excentrique (4), le premier contour (42) étant agencé de manière excentrique par rapport au second contour (44),
dans lequel l'élément excentrique (4) est susceptible d'être immobilisé via un premier moyen de fixation (8) au moins en coopération de forces sur l'unité formant cadre (2) ou sur l'unité d'ajustement (6), et
dans lequel, par réglage d'un angle de rotation déterminé (α) de l'élément excentrique (4), l'unité formant cadre (2) et l'unité d'ajustement (6) sont susceptibles d'être placées de manière bloquée et capables de pivoter l'une par rapport à l'autre dans une position prédétenninée le long d'une direction d'ajustement (L),
dans lequel le centre du premier contour (42) est écarté à raison d'une excentricité (E) depuis le centre du second contour (44), et
le premier contour (42) a un rayon moyen (R1) et le second contour (44) a un rayon moyen (R2),
**caractérisé en ce que** le rapport de (R2-R1-E) sur (R2) tombe dans la plage de 0,2 à 0,4.

2. Dispositif d'ajustement pour essieu selon la revendication 1,
dans lequel le premier contour (42) ou le second contour (44) est réalisé essentiellement en forme de cercle, et
dans lequel l'autre contour (42, 44) est respectivement réalisé sous forme de polygone régulier ou essentiellement en forme de cercle.

3. Dispositif d'ajustement pour essieu selon l'une des revendications précédentes,
dans lequel le rapport de (R2-R1-E) sur (R2) est d'environ 0,23.

4. Dispositif d'ajustement pour essieu selon l'une des revendications précédentes,
dans lequel le second contour (44) de l'élément excentrique (4) est susceptible d'être amené en engagement direct soit avec l'unité formant cadre (2) soit avec l'unité d'ajustement (6).

5. Dispositif d'ajustement pour essieu selon l'une des revendications précédentes,
dans lequel l'élément excentrique (4) est susceptible d'être bloqué via un second moyen de fixation (10) en coopération de formes au moins à l'encontre d'un déplacement en direction d'ajustement (L) par rapport à l'unité formant cadre (2) ou à l'unité d'ajustement (6).

6. Dispositif d'ajustement pour essieu selon l'une des revendications précédentes,
dans lequel l'unité d'ajustement (6) comprend une zone d'engagement (62) qui est susceptible d'être amenée en engagement au moins localement en coopération de formes avec le premier contour (42) de l'élément excentrique (4) ou avec le premier moyen de fixation (8).

7. Dispositif d'ajustement pour essieu selon la revendication 6,
dans lequel l'unité formant cadre (2) comporte une zone de guidage (22) dans laquelle le premier contour (42) de l'élément excentrique (4) ou la zone d'engagement (62) de l'unité d'ajustement (6) ou encore le premier moyen de fixation (8) s'engage au moins localement en coopération de formes, afin de bloquer la zone d'engagement (62) de l'unité d'ajustement (6) à l'encontre d'un déplacement transversalement à la direction d'ajustement (L) par rapport à l'unité formant cadre (2).

8. Dispositif d'ajustement pour essieu selon la revendication 6 ou 7, dans lequel la zone d'engagement (62) de l'unité d'ajustement (6) est réalisée sous la forme d'un évidement, et
dans lequel le premier contour (42) de l'élément excentrique (4) est réalisé sous la forme d'une saillie et s'engage au moins localement en coopération de formes dans la zone d'engagement (62).

9. Dispositif d'ajustement pour essieu selon la revendication 5 ou 6, dans lequel le premier élément de fixation (8) est susceptible d'être amené en engagement au moins localement en coopération de formes avec la zone de guidage (22) de l'unité formant cadre (2) et avec le premier contour (42) de l'élément excentrique (4) et avec la zone d'engagement (62) de l'unité d'ajustement (6).

10. Dispositif d'ajustement pour essieu selon l'une des revendications précédentes,
dans lequel le premier contour (42) et le second contour (44) de l'élément excentrique (4) sont réalisés en forme de cercle, afin d'immobiliser l'élément excentrique (4) sur l'unité formant cadre (2) à des angles de rotation quelconques (α), afin de permettre un réglage continu de la position de l'unité d'ajustement (6) par rapport à l'unité formant cadre (2) le long de la direction d'ajustement (L).

11. Dispositif d'ajustement pour essieu selon l'une des revendications 1 à 9,
dans lequel le second contour (44) de l'élément excentrique (4) est réalisé sous forme de polygone régulier,
dans lequel le second moyen de fixation (10) bloque l'élément excentrique (4) à l'encontre d'une rotation par rapport à l'unité formant cadre (2).
